# EUROPEAN PATENT APPLICATION

(11) **EP 2 421 197 A1**
(43) Date of publication of application: **22.02.2012**
(21) Application number: 09844260.1
(22) Date of filing: 08.05.2009
(51) Int. Cl.: H04L 12/24

(54) **METHOD AND APPARATUS FOR PERFORMING DEVICE MANAGEMENT VIA GATEWAY DEVICE AND DEVICE MANAGEMENT SERVER THEREOF**

(71) Applicant: Huawei Technologies Co., Ltd., Shenzhen, Guangdong 518129 (CN)
(72) Inventor: ZHANG, Yongjing, Guangdong 518129 (CN); DING, Chuansuo, Guangdong 518129 (CN); WANG, Sichen, Guangdong 518129 (CN); FENG, Mingzheng, Guangdong 518129 (CN); ZHANG, Renzhou, Guangdong 518129 (CN); HUANG, Chen, Guangdong 518129 (CN)
(74) Representative: Körber, Martin Hans
(86) International application number: PCT/CN2009/071711
(87) International publication number: WO 2010/127508

(57) **Abstract**

The present invention relates to the field of communications technologies and discloses a method and an apparatus for performing device management through a gateway device and a Device Management Server (DMS). The method for performing device management through a gateway device includes: receiving a register message which carries a terminal ID and a gateway device address; associating and storing the terminal ID and the gateway device address; obtaining the gateway device address according to the association record; and sending a Device Management (DM) notification message to the gateway device according to the gateway device address so that the gateway device performs corresponding processing according to the DM notification message. With the technical solution of the present invention, a DMS is able to send a DM notification to a user terminal through a gateway device.

## Description

### FIELD OF THE INVENTION

The present invention relates to the field of communications technologies, and in particular, to a method and an apparatus for performing device management through a gateway device and a Device Management Server (DMS).

### BACKGROUND OF THE INVENTION

Open Mobile Alliance (OMA) Device Management (DM) is a uniform device management specification defined by the DM working group of the OMA. This specification is applicable for a third party to manage and set wireless network terminals through a wireless network. The third party may be a Device Management Authority (DMA) such as a mobile operator, a service provider, or the information management department of a cooperator.

In a prior art, when the DMA operates a Management Object (MO), a DM session needs to be created between a DMS and a Device Management Client (DMC). To create the DM session, the DMC must initiate a connect request to the DMS by using a preset account. The DMS cannot send a connect request to the DMC. Therefore, when the network wants to create a DM session, the DMS needs to send a DM notification message to the DMC to trigger the DMC to initiate a connect request to the DMS, so as to create a DM session.

The current DM notification technique is applicable to only scenarios where a terminal address is permanent and directly reachable. For example, if a terminal is a mobile phone of a user, the DMS can send a DM notification message to a specific Mobile Station International ISDN Number (MSISDN) preset in the DMS through the push technique of the Wireless Application Protocol (WAP), so that the DM notification message is sent to the DMC on the specified mobile phone to complete the DM notification procedure.

In certain fields, however, it is probable that a user terminal should rely on a gateway device to get access to an external network. Because of the address screening of the gateway device and the mobility of the terminal, for example, when the terminal switch its home network, the DMS is unable to perform device management (such as software/firmware upgrade and virus library update) to the terminals in time with the DM notification technique in the prior art. This consequently affects the user experience.

### SUMMARY OF THE INVENTION

Embodiments of the present invention provide a method and an apparatus for managing device through a gateway device and a DMS, so that the DMS can perform device management to a terminal through the gateway device. For the above purpose, the following technical solution is adopted:

An embodiment of the present invention provides a method for performing device management through a gateway device, which includes:
receiving a register message which carries a terminal ID and a gateway device address;
associating and storing the terminal ID and the gateway device address;
obtaining the gateway device address according to an association record; and
sending a DM notification message to the gateway device according to the gateway device address so that the gateway device performs corresponding processing according to the DM notification message.

An embodiment of the present invention provides method for performing device management through a gateway device, which includes:
sending a register message to a DMS, where the register message carries a gateway device address and a terminal ID, so that the DMS associates and stores the gateway device address and the terminal ID, and sends a DM notification message to the gateway device according to the stored gateway device address, so that the gateway device performs corresponding processing according to the DM notification message.

An embodiment of the present invention provides a DMS, which includes:
a first receiving module, configured to receive a register message which carries a terminal ID and a gateway device address;
an associating module, configured to associate and store the terminal ID and the gateway device address;
an obtaining module, configured to obtain the gateway device address according to an association record; and
a first sending module, configured to send a DM notification message to a gateway device according to the gateway device address so that the gateway device performs corresponding processing according to the DM notification message.

An apparatus for managing devices through a gateway device includes:
a second sending module, configured to send a register message to a DMS, where the register message carries a gateway device address and a terminal ID, so that the DMS associates and stores the gateway device address and the terminal ID, and sends a DM notification message to the gateway device according to the stored gateway device address, therefore the gateway device performs corresponding processing according to the DM notification message.

In the technical solution provided in the embodiments of the present invention, when the DMS intends to perform device management to a terminal, the DMS sends a DM notification message to the home gateway device of the terminal and the gateway device performs corresponding processing according to the DM notification message. Therefore, the DMS is able to perform device management to the terminal through the gateway device.

### BRIEF DESCRIPTION OF THE DRAWINGS

To better explain the technical solution of the present invention, the accompanying drawings required in the description of the embodiments of the present invention are briefly described. It is apparent that the accompanying drawings illustrate only some exemplary embodiments of the present invention. Those skilled in the art can derive other drawings from these drawings without any creative effort. In the drawings:

FIG 1 is a flowchart of a method for performing device management through a gateway device according to an embodiment of the present invention;

FIG 2 is a flowchart of a method for performing device management through a gateway device according to an embodiment of the present invention;

FIG 3 illustrates a method for performing device management through a gateway device according to an embodiment of the present invention;

FIG 4 illustrates a method for performing device management through a gateway device according to an embodiment of the present invention;

FIG 5 illustrates a method for performing device management through a gateway device according to an embodiment of the present invention;

FIG 6 illustrates a structure of a DMS according to an embodiment of the present invention;

FIG 7 illustrates a structure of an apparatus for performing device management through a gateway device according to an embodiment of the present invention;

FIG 8 illustrates a structure of an apparatus for performing device management through a gateway device according to an embodiment of the present invention; and

FIG 9 illustrates a structure of an apparatus for performing device management through a gateway device according to an embodiment of the present invention.

### DETAILED DESCRIPTION OF THE EMBODIMENTS

To better explain the technical solution of the present invention, the embodiments of the present invention are described in detail with reference to the accompanying drawings. It is apparent that the embodiments herein are only some exemplary embodiments of the present invention. Based on the embodiments herein, those skilled in the art can derive other embodiments without any creative effort and such other embodiments all fall into the protection scope of the present invention.

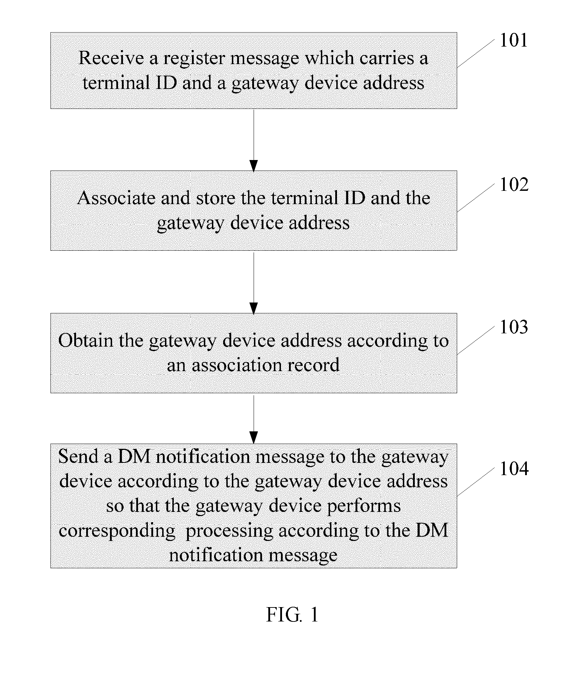

FIG 1 illustrates a method for performing device management through a gateway device. The method includes the following steps:

101. Receive a register message which carries a terminal ID and a gateway device address.

102. Associate and store the terminal ID and the gateway device address.

103. Obtain the gateway device address according to an association record.

104. Send a DM notification message to the gateway device according to the gateway device address so that the gateway device performs corresponding processing according to the DM notification message.

In the method for performing device management through a gateway device according to the embodiment of the present invention, the terminal ID and the address of the home gateway device of the terminal in the received register message are associated and stored. When it is necessary to perform device management to a terminal, the address of the home gateway device of the managed terminal is obtained according to an association record, and a DM notification message is sent to the gateway device according to the gateway device address. Then the gateway device receives the DM notification message and performs the corresponding processing according to the DM notification message. so that the device management for the terminal is performed through the gateway device.

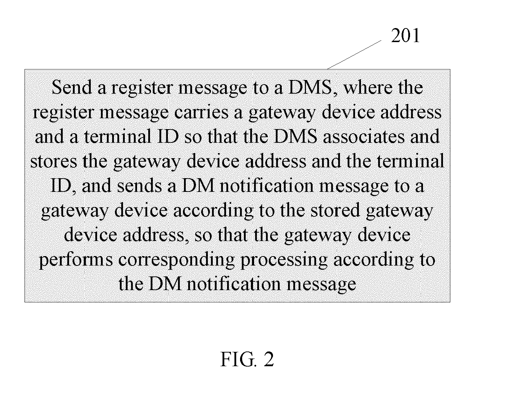

FIG 2 illustrates a method for performing device management through a gateway device. The method includes the following steps:

201. Send a register message to a DMS, where the register message carries a gateway device address and a terminal ID, so that the DMS associates and stores the gateway device address and the terminal ID, and sends a DM notification message to a gateway device according to the stored gateway device address, so that the gateway device performs corresponding processing according to the DM notification message.

In the method for performing device management through a gateway device according to the embodiment of the present invention, a register message which carries the address of a gateway device and the ID of a terminal that homes to the gateway device is sent to the DMS. So that when the DMS needs to perform device management to a device that homes to the gateway device, such as the terminal, the DMS can obtain the address of the gateway device according to the register message and send a DM notification message to the gateway device. Then, the gateway device performs corresponding processing according to the DM notification message. Therefore, the DMS performs device management to the terminal through the gateway device.

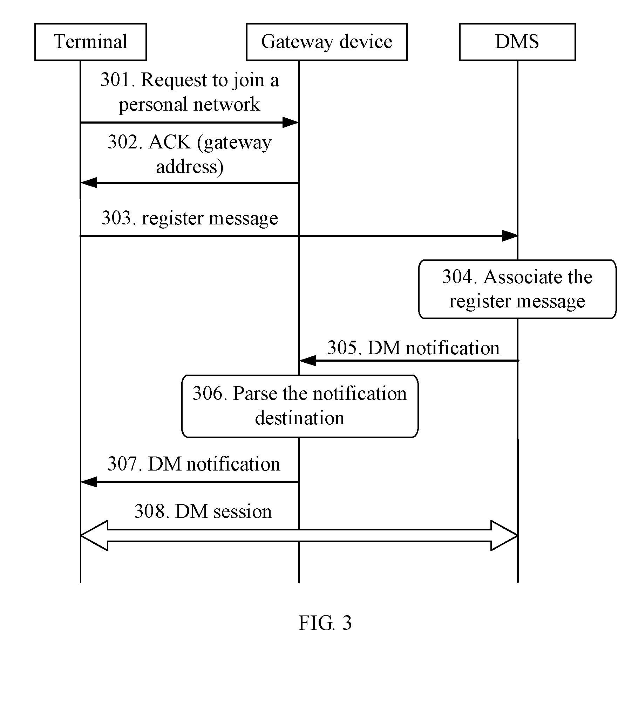

FIG 3 illustrates a method for performing device management through a gateway device. The method includes the following steps:

301. A terminal sends a Join Personal Network Request to a gateway device.

302. The gateway device authenticates the terminal, and after successful authentication, returns a Join Personal Network ACK message which carries the address of the gateway device to the terminal.

303. The terminal sends a register message to a DMS; the register message carries a terminal ID, the address of the gateway device, and identity information (such as a fey) for the DMS to authenticate the terminal.

In this step, the terminal may send the register message to the DMS directly, or via the gateway device, or through any other path. The register message may be carried in multiple message formats, such as a DM session message or a short message. The following provides an exemplary portion of the register message carried in a DM session message.

```
          <SyncBody>
          <Alert>
             <CmdID>2</CmdID>
             <Data>1226</Data> <!-- Generic Alert -->
             <Item>
                 <Meta>
                    <Type xmlns="syncml:metinf">
                        Reversed-Domain-Name: org.openmobilealliance.notificaton
                    </Type>
                    <Format xmlns="syncml:metinf">xml</Format>
                    <Mark xmlns="syncml:metinf">critical</Mark> <!-- Optional -->
                 </Meta>
                 <Data>
                    <!- Notification Destination and Address -->
                <Destination>
                    <PNEID>IMEI: 493005100592800</PNEID>
                </Destination>
                <Address>MSISDN: 13912345678 </Address>
                 </Data>
             </Item>
          </Alert>
          </SyncBody>
```

IMEI is the acronym of International Mobile Station Equipment Identity. The entire register message is encapsulated in an <Alert> element in the message body initiated by a DMC on the terminal to the DMS. The value of sub-element <Item>/<Meta>/<Type> is Reversed-Domain-Name: org.openmobilealliance.notificaton, indicating that the subelement <Item> is used to register the address of the home gateway device of the terminal; both the <Item>/<Data>/<Destination>/<PNEID> sub-element and the <Item>/<Data>/<Address> sub-element carry the ID of the terminal and the address of the home gateway device of the terminal respectively. Similarly, the terminal ID and the address of the home gateway device of the terminal may be used as basic information of the terminal and carried in a data packet sent by the DMC to the DMS in the form of an extended DevInfo MO, for example:

```
          <SyncBody>
            <Replace>
                <CmdID>3</CmdID>
                <Item>
                    <Source><LocURI>./DevInfo/DevId</LocURI></Source>
                    <Meta>
                        <Format xmlns='syncml:metinf'>chr</Format>
                        <Type xmlns='syncml:metinf'>text/plain</Type>
                    </Meta>
                    <Data>IMEI:493005100592800</Data>
                </Item>
                <Item>
                    <Source><LocURI>./DevInfo/NotiAddr</LocURI></Source>
                    <Meta>
                        <Format xmlns='syncml:metinf'>chr</Format>
                        <Type xmlns='syncml:metinf'>text/plain</Type>
                    </Meta>
                    <Data> MSISDN: 13912345678 </Data>
                </Item>
            </Replace>
          <SyncBody>
```

The ./DevInfo/DevId node carries the terminal ID, and the ./DevInfo/NotiAddr node is the extended DevInfo MO node which carries the address of the home gateway device of the terminal. In addition, the identity information (such as a key) for the DMS to authenticate the terminal can be carried in a <Cred> element in the message header according to the standard DM format. This will not be further described here.

304. The DMS receives the register message, associates the terminal ID and gateway device address in the register message and stores the association record. The association record may be stored in the following tabular form:

| **Terminal ID** | **Gateway Device Address** |
|---|---|
| IMEI:493005100592800 | MSISDN:13912345678 |

The terminal ID may be regarded as the index of the table. When the DMS receives the register message, the DMS queries whether the terminal ID in the register message is already included in a stored association record according to the index. If an association of the terminal ID is already stored, and the gateway device address in the association record is the same as the gateway device address in the register message, the DMS does not associating store the terminal ID and gateway device address in the register message again. If the gateway device address in the association record is not the gateway device address in the register message, it means that the terminal may switch its belonged gateway device. In this case, the DMS replaces the gateway device address in the stored association record with the gateway device address in the register message. If the terminal ID in the register message is not included in the stored association record, the DMS adds a new association record to the table. Therefore, when the terminal sends a register message after switching its home gateway device, the DMS only needs to store the address of the new gateway device without the need to store the terminal ID again. The operation of the DMS is spared.

305. When the DMS intends to perform device management to the terminal, the DMS sends a DM notification message to the gateway device according to the address of the gateway device.

Specifically, the DMS obtains the address of the home gateway device (such as MSISDN: 13912345678) of the managed terminal according to the terminal ID (such as IMEI: 493005100592800) in the association record and sends the DM notification message to the gateway device according to the address of the gateway device. In the embodiment of the present invention, the gateway device address is in the form of an MSISDN and therefore, the DM notification message can be carried in a short message. The DM notification message carries the terminal ID (IMEI: 493005100592800); the terminal ID may be carried in a reserved extension field in the DM notification message header or a user-defined field in the message body. When the DMS needs to perform device management to multiple terminals at the same time, if the home gateway device addresses of the multiple terminals obtained according to the association record are the same, the DMS may send to the gateway device only one DM notification message which carries the IDs of the multiple terminals, therefore saving the signaling overhead from the DMS to the gateway device.

306. After the gateway device receives the DM notification message, the gateway parses notification destination(s) to determine that the destination(s) in the DM notification message is managed terminal(s).

Specifically, the gateway device may determine that the destination(s) in the DM notification message is the managed terminal(s) according to the terminal ID (IMEI: 493005100592800) carried in the DM notification message.

307. The gateway device forwards the DM notification message to the managed terminal(s).

308. The managed terminal(s) receives the DM notification message and sets up a DM session with the DMS so that the DMS can perform device management to the managed terminal(s).

In the embodiment of the present invention, the communication between the terminal(s) and the gateway device can be implemented via any short-distance wireless or wired communication technique.

In the embodiment of the present invention, the terminal sends a register message to the DMS so that the DMS obtains an embodiment record between the terminal ID and the address of the home gateway device. When the DMS intends to perform device management to the terminal, the DMS sends a DM notification message to the home gateway device of the managed terminal according to the association and the gateway device forwards the DM notification message to the managed terminal. The managed terminal creates a DM session with the DMS according to the DM notification message to accept the device management of the DMS. Therefore, the DMS perform device management to the terminal through the gateway device.

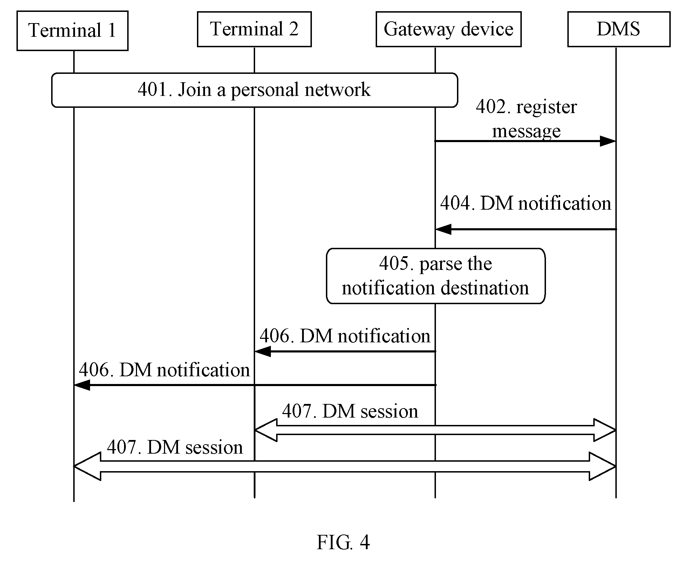

FIG 4 illustrates another method for perform device management through a gateway device. The method includes the following steps:

401. A terminal accesses a home personal network of a gateway device.

402. The gateway device sends a register message to a DMS. The register message carries at least one terminal ID, a gateway device address, and identity information (such as a key) for the DMS to authenticate the gateway device. The Register massage may be carried in multiple message formats, such as a DM session message or a short message. The following provides an exemplary portion of the register message carried in a DM session message:

```
          <SyncBody>
          <Alert>
             <CmdID>2</CmdID>
             <Data>1226</Data> <!-- Generic Alert -->
             <Item>
                 <Meta>
                    <Type xmlns="syncml:metinf">
                        Reversed-Domain-Name: org.openmobilealliance.notificaton
                    </Type>
                    <Format xmlns="syncml:metinf">xml</Format>
                    <Mark xmlns="syncml:metinf">critical</Mark> <!-- Optional -->
                 </Meta>
                 <Data>
                    <!- Notification Destination and Address -->
                <Destination>
                    <PNEID>IMEI: 493005100592800</PNEID>
          <PNEID>IMEI: 493005100592801</PNEID>
                </Destination>
                <Address>MSISDN: 13912345678 </Address>
                 </Data>
             </Item>
          </Alert>
...
          </SyncBody>
```

The entire register message is encapsulated in an <Alert> element in the message body initiated by the DMC in the gateway device to the DMS. Specifically, the value of <Item>/<Meta>/<Type> is Reversed-Domain-Name: org.openmobilealliance.notificaton, indicating that the <Item> element is used to register the notification address of the terminal; the <Item>/<Data>/<Destination> sub-element carries a list of device IDs (here, IDs of terminal 1 and terminal 2) of the multiple terminals including a gateway device, the <Item>/<Data>/<Address> sub-element carries the common DM notification address (that is, the gateway device address) of all the terminals; in addition, the identity information (such as a key) may be carried in a <Cred> element in the message header according to the standard DM format.

403. The DMS receives the register message, associates the terminal IDs and the address of the home gateway device of the terminals in the register message and stores the association record. The association record may be stored in the following tabular form:

| **Terminal ID** | **Gateway Device Address** |
|---|---|
| IMEI:493005100592800 | MSISDN:13912345678 |
| IMEI:493005100592801 | MSISDN:13912345678 |

The terminal ID may be regarded as the index of the table. When the DMS receives the register message, the DMS queries whether the terminal IDs in the register message are already included in a stored embodiment record according to the index. If an embodiment record of a terminal ID is already stored, and the gateway device address in the association record is the same as the gateway device address in the register message, the DMS does not associating store the terminal ID and gateway device address in the register message again. If the gateway device address in the association record is not the gateway device address in the register message, it means that the terminal may switch its home gateway device. In this case, the DMS replaces the gateway device address in the stored association record with the gateway device address in the Register message. If the terminal ID in the register message is not included in the stored association record, the DMS adds a new association record to the table. Therefore, when the terminal sends a register message after switching its home gateway device, the DMS only needs to store the address of the new gateway device without the need to store the terminal ID again. The operation of the DMS is spared.

404. When the DMS intends to perform device management to the terminals, the DMS sends a DM notification message to the gateway device according to the address of the gateway device.

In the embodiment of the present invention, the DMS intends to perform device management for both terminal 1 and terminal 2 at the same time. Specifically, the DMS obtains the address of the home gateway device (MSISDN: 13912345678) of terminal 1 and terminal 2 according to the terminal IDs (IMEI: 493005100592800 and IMEI: 493005100592801) in the association record. Because terminal 1 and terminal belong to the same home gateway device, the DMS only needs to send one DM notification message to the gateway device. The DM notification message carries the IDs of terminal 1 and terminal 2 (IMEI: 493005100592800 and IMEI: 493005100592801). The IDs of terminal 1 and terminal 2 may be carried in a reserved extension field in the DM notification message header or a user-defined field in the message body.

405. After the gateway device receives the DM notification message, the gateway device parses the notification destinations to determine that the destinations of the DM notification message are terminal 1 and terminal 2.

Specifically, the gateway device determines that the destinations of the DM notification message are terminal 1 and terminal 2 according to the IDs of terminal 1 and terminal 2 (IMEI: 493005100592800 and IMEI: 493005100592801) carried in the notification message.

406. The gateway device forwards the DM notification message to terminal 1 and terminal 2.

407. Terminal 1 and terminal 2 receive the DM notification message and set up a DM session with the DMS so that the DMS can perform device management for the terminals.

In the embodiment of the present invention, the communication between the terminals and the gateway device can be implemented via any short-distance wireless or wired communication technique.

In the embodiment of the present invention, the gateway device sends a register message to the DMS so that the DMS obtains the association record between the address of the gateway device and the IDs of terminals that home to the gateway device. When the DMS intends to manage the terminals that home to the gateway device, the DMS sends a DM notification message to the gateway device according to the association record, and the gateway device forwards the DM notification message to the terminals home to the gateway device. The terminals that home to the gateway device set up a DM session with the DMS respectively according to the DM notification message to accept the device management of the DMS. Therefore, the DMS perform device management to the terminals through the gateway device.

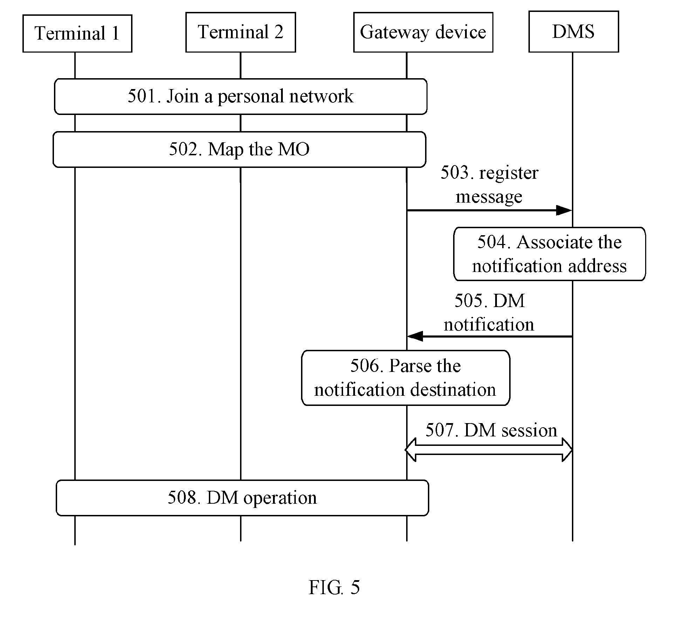

FIG 5 illustrates another method for performing device management through a gateway device. The method includes the following steps:

501. A terminal accesses a home personal network of a gateway device.

502. The gateway device maps the DM operations that can be implemented on terminal(s) that home to the gateway device into its management tree structure as MO data.

The number of terminals home to the gateway device may be one or above one. In the embodiment of the present invention, two terminals that home to the gateway device are described for exemplary purposes. If a terminal supports the standard DM MO data structure, the MOs on the terminal can be mapped into the management tree of the gateway device directly through data synchronization (such as OMA Data Synchronization Protocol) via a short-distance connection technique (Universal Serial Bus (USB), Wireless Fidelity (WiFi), Bluetooth, and so on) between the terminal and the gateway device. If the terminal does not support the standard DM MO data structure, the gateway device can convert the DM operations that can be implemented on the terminal into corresponding MOs via a short-distance connection technique (USB, WiFi, Bluetooth, and so on) between the terminal and the gateway device and maps the MOs into the management tree of the gateway device. For example, a list of software installed on the terminal and the related version numbers are provided for the gateway device, and the gateway device translates the information to the standard DM MO data structure according to the syntactic rules of the standard DM MO and adds the management objects under a node in the management tree. In this step, the gateway device may determine whether the terminal supports the standard DM MO data structure according to the terminal capability information indicated when the terminal accesses the personal network in step 501.

503. The gateway device sends a register message to the DMS. The register message carries the IDs of terminal 1 and terminal 2, the address of the gateway device, and the identity information (such as a key) for the DMS to authenticate the gateway device. Further, the register message may also include an identification of the MOs of terminal 1 and terminal 2 mapped into the gateway device. The register message may be carried in multiple message formats, such as a DM session message or a short message. The following provides an exemplary portion of the register message carried in a DM session message:

```
          <SyncBody>
          <Alert>
             <CmdID>2</CmdID>
             <Data>1226</Data> <!-- Generic Alert -->
             <Item
                 <Meta>
                    <Type xmlns="syncml:metinf">
                        Reversed-Domain-Name: org.openmobilealliance.notificaton
                    </Type>
                    <Format xmlns="syncml:metinf">xml</Format>
                    <Mark xmlns="syncml:metinf">critical</Mark> <!-- Optional -->
                 </Meta>
                 <Data>
                    <!- Notification Destination and Address -->
                <Destination>
                    <PNEID mapped=true>IMEI: 493005100592800</PNEID>
          <PNEID mapped=true>IMEI: 493005100592801</PNEID>
                </Destination>
                <Address>MSISDN: 13912345678 </Address>
                 </Data>
             </Item>
          </Alert>
...
          </SyncBody>
```

The entire register message is encapsulated in an <Alert> element in the message body initiated by the DMC in the gateway device to the DMS. The value of <Item>/<Meta>/<Type> is Reversed-Domain-Name: org.openmobilealliance.notificaton, indicating that the <Item> element is used to register the notification address of the terminal. The <Item>/<Data>/<Destination> sub-element carries a list of device Ids of multiple terminals including the gateway device. The <Item>/<Data>/<Address> sub-element carries the common DM notification address (that is, the gateway device address) of all the terminals. The identity information (such as a key) may be carried in a <Cred> element in the message header according to the standard DM format. Optionally, the "mapped" attribute of <Item>/<Data>/<Destination>/<PNEID> sub-element is true or false, indicating whether the MO data of the terminal is mapped into the management tree of the gateway device.

504. The DMS receives the register message, associates the IDs of terminal 1 and terminal 2 and the address of the gateway device in the register message, and stores the association record. Accordingly, the DMS also stores an identification of the MOs of terminal 1 and terminal 2 mapped into the gateway device. The association record may be stored in the following tabular form:

| **Terminal ID** | **Gateway device Address** | **Is MO Mapped** |
|---|---|---|
| IMEI:493005100592800 | MSISDN:13912345678 | true |
| IMEI:493005100592801 | MSISDN:13912345678 | true |

The terminal ID may be regarded as the index of the table. When the DMS receives the register message, the DMS queries whether the terminal IDs in the register message are already included in a stored association record according to the index. If an association record of a terminal ID is already stored, and the gateway device address in the association record is the same as the gateway device address in the register message, the DMS does not associating store the terminal ID and gateway device address in the register message again. If the gateway device address in the association record is not the gateway device address in the register message, it means that the terminal may switch its home gateway device. In this case, the DMS replaces the gateway device address and the MO mapping identification in the stored record with the gateway device address and the MO mapping identification in the register message. If the terminal ID in the register message is not included in the stored association record, the DMS adds a new association record to the table. Therefore, when the terminal sends a register message after switching its belonged gateway device, the DMS only needs to store the address of the new gateway device without the need to store the terminal ID again. The operation of the DMS is spared.

505. When the DMS intends to perform device management to the terminals (terminal 1 and terminal 2 here), the DMS obtains the address of the gateway device (MSISDN: 13912345678) belongs to terminal 1 and terminal 2 according to the terminal IDs (IMEI: 493005100592800 and IMEI: 493005100592801) in the associations. Because terminal 1 and terminal 2 have the same home gateway device, the DMS only needs to send one DM notification message to the gateway device. Further, according to the "Is MO Mapped" identification (true in the embodiment of the present invention, indicating that the MO data is mapped into the management tree of the gateway device) in the associations, the DMS only needs to set up a DM session with the gateway device directly to perform device management to the terminals that home to the gateway device. The DM notification message, therefore, can take on the DM notification message format in the prior art directly without carrying any terminal ID. Alternatively, the ID of the gateway device may be carried in a reserved extension field in the DM notification message header or a user-defined field in the message body.

506. After the gateway device receives the DM notification message, the gateway device parses the notification destination to determine that the destination of the DM notification message is the gateway device.

Specifically, the gateway device determines that the destination of the DM notification message is the gateway device by checking that the DM notification message carries no terminal ID (that is, in the prior DM notification message format) or only the gateway device ID; or, when the DM notification message is in the prior DM notification message format, the default destination of the DM notification message is the gateway device. When the DM notification message carries the gateway device ID, the gateway device determines that the destination of the DM notification message is the gateway device according to the gateway device ID.

507. The gateway device sets up a DM session with the DMS and receives an operation command on the MO data of terminal 1 and terminal 2 mapped into the gateway device.

In the session, the DMS requests the MO data of terminal 1 and terminal 2 which is mapped into the gateway device according to identification information in the associations indicating the MO data of terminal 1 and terminal 2 is mapped into the management tree of the gateway device. Then the DMS decides to execute the corresponding management operation (such as software upgrading) according to the MO data (such as software version information) and sends the operation command including the related MO data such as the new version of a software program to the gateway device.

508. The gateway device executes the corresponding management operation for terminal 1 and terminal 2 according to the operation command.

The gateway device performs the corresponding management operation for terminal 1 and terminal 2 according to the MO data of terminal 1 and terminal 2 mapped into the gateway device. For example, if the terminal supports the standard DM MO data structure, the gateway device can synchronize the MO data information changed by the DMS operation to the terminal through data synchronization (such as OMA Data Synchronization protocol). Then, the terminal can execute the corresponding DM operation according to the updated MO data. If the terminal does not support the standard DM MO data structure, the gateway device can convert the MO data changed by the DMS operation to a DM operation command understandable to the terminal and send the operation command to the corresponding terminal. For example, the gateway device sends the new version of a software package in the MO data to the terminal via a private download and installation command that can be parsed by the terminal and therefore instructs the terminal to execute the related DM operation.

In the embodiment of the present invention, the gateway device sends a register message to the DMS so that the DMS obtains the association record between the address of the gateway device and the IDs of terminals that home to the gateway device. When the DMS intends to perform device management to terminals that home to the gateway device, the DMS sends a DM notification message to the gateway device according to the association record. The gateway device then sets up a DM session with the DMS and receives an operation command on the MO data of the managed terminals sent by the DMS. The gateway device performs the corresponding management operation for the managed terminals. Therefore, the DMS manages the terminals through the gateway device.

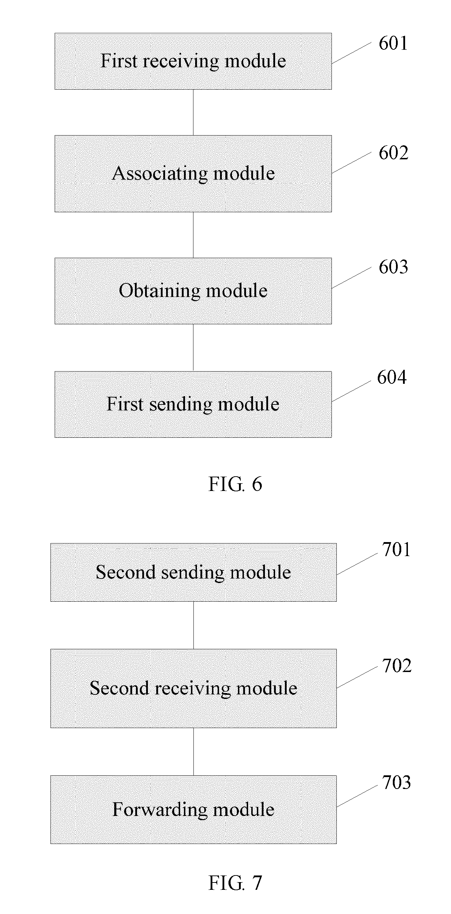

As shown in FIG 6, a DMS provided in an embodiment of the present invention includes:
a first receiving module 601, configured to receive a register message which carries a terminal ID and a gateway device address and which is sent by a gateway device or a terminal;
an associating module 602, configured to associate and store the terminal ID and gateway device address in the register message received by the first receiving module 601;
an obtaining module 603, configured to obtain the address of the home gateway device of the terminal according to the association obtained by the associating module 602 when the DMS intends to manage the terminal; and
a first sending module 604, configured to send a DM notification message to the gateway device according to the gateway device address obtained by the obtaining module 603 so that the gateway device performs corresponding processing according to the DM notification message.

The DMS according to the embodiment of the present invention associates and stores the terminal ID and the address of the home gateway device of the terminal in the received register message. When it is necessary to manage a terminal, the DMS obtains the address of the home gateway device of the managed terminal according to the association record and sends a DM notification message to the gateway device according to the address of the home gateway device. Then the gateway device receives the DM notification message and performs the corresponding processing according to the DM notification message. Therefore, the DMS perform device management to the terminal through the gateway device.

FIG 7 illustrates an apparatus for performing device management through a gateway device in an embodiment of the present invention. The apparatus includes:
a second sending module 701, configured to send a register message to a DMS, where the register message carries a gateway device address and a terminal ID, so that the DMS associates and stores the gateway device address and the terminal ID, and sends a DM notification message to a gateway device according to the stored gateway device address, therefore the gateway device performs corresponding processing according to the DM notification message.

The apparatus for performing device management through a gateway device according to the embodiment of the present invention may be a gateway device or a terminal. The apparatus sends a register message to the DMS, where the register message carries the address of a gateway device and the ID of a terminal that homes to the gateway device. When the DMS needs to perform device management to the terminal that homes to the gateway device, the DMS obtains the address of the gateway device according to the register message and sends a DM notification message to the gateway device which performs corresponding processing according to the DM notification message. Therefore, the DMS performs the device management to the terminal through the gateway device.

As shown in FIG 7, the apparatus for performing device management through a gateway device in an embodiment of the present invention further includes:
a second receiving module 702, configured to receive the DM notification message which is sent by the DMS and carries the ID of the managed terminal; and
a forwarding module 703, configured to send the DM notification message to the managed terminal according to the ID of the managed terminal, so that the managed terminal sets up a session with the DMS according to the DM notification message to accept the device management of the DMS.

The apparatus for managing devices through a gateway device according to the embodiment of the present invention may be a gateway device. The apparatus receives the DM notification message sent by the DMS and forwards the DM notification message to the terminal which sets up a session with the DMS to accept the device management of the DMS. Therefore, the DMS performs device management to the terminal through the gateway device.

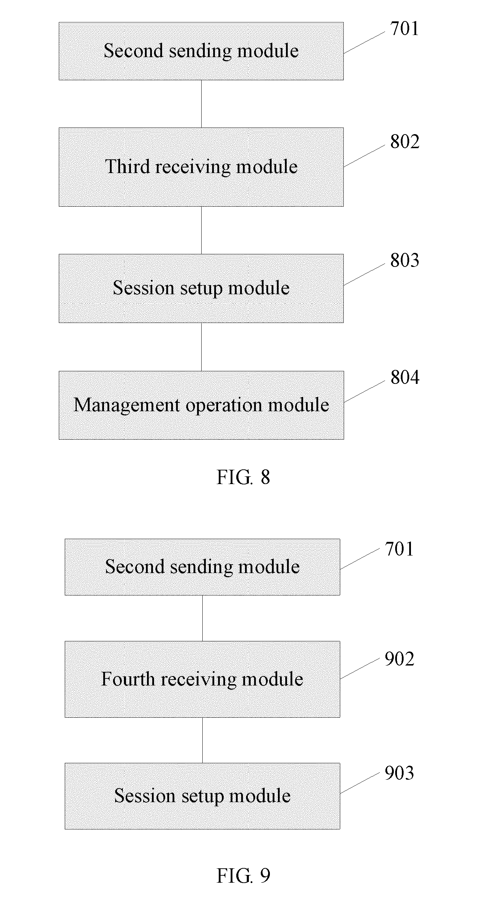

FIG 8 illustrates an apparatus for performing device management through a gateway device in an embodiment of the present invention. In addition to the second sending unit 701, the apparatus further includes:
a third receiving module 802, configured to receive the DM notification message sent by the DMS;
a session setup module 803, configured to set up a session with the DMS according to the DM notification message and receive an operation command of the DMS on the MOs mapped into the apparatus; and
a management operation module 804, configured to perform a corresponding operation for the terminal corresponding to the MOs according to the operation command.

The apparatus for performing device management through a gateway device according to the embodiment of the present invention may be a gateway device. The apparatus sends a register message to the DMS, where the register message carries the address of the gateway device and the ID of a terminal that homes to the gateway device. When the DMS intends to perform device management the terminal that homes to the gateway device, the DMS can obtain the address of the gateway device according to the register message and send the DM notification message to the gateway device so as to set up a DM session with the gateway device. Then, the gateway device receives the operation command sent by the DMS on a MO mapped into the gateway device and performs corresponding processing on the managed terminal according to the operation command. Therefore, the DMS perform device management to the terminal through the gateway device.

As shown in FIG 9, the apparatus for performing device management through a gateway device in an embodiment of the present invention includes the second sending unit 701 and further includes:
a fourth receiving module 902, configured to receive the DM notification message sent by the gateway device;
a session setup module 903, configured to set up a session with the DMS according to the DM notification message to accept a management operation of the DMS.

The apparatus for performing device management through a gateway device according to the embodiment of the present invention may be a terminal. The apparatus sends a register message to the DMS, where the register message carries the ID of the terminal and the address of the gateway device, so that the DMS can send the DM notification message to the gateway device according to the register message. The gateway device then forwards the DM notification message to the terminal. After receiving the DM notification message, the terminal sets up a session with the DMS according to the DM notification message to accept the management operation of the DMS. Therefore, the DMS performs device management to the terminal through the gateway device.

It should be noted that, in an actual DM system, multiple DMSs may provide the DM service for different terminals and gateway devices, and each DMS is uniquely identified by a server ID. For a terminal or a gateway device to connect to the DMS and accept the DM service, a legal account that matches the server ID of the related DMS must be configured locally. Because different DM accounts may be configured on different terminals and gateway devices, the DMSs that the terminals and gateway devices can connect to and accept the DM service from are also different. In certain cases, no DM account is configured on a terminal or a gateway device. Therefore, when different DM accounts are configured, the DM notification can be implemented according to one or multiple embodiments of the technical solution provided herein according to the DM account configuration of the gateway devices and the terminals. These are variations that can be derived by those skilled in the art from the embodiments of the present invention disclosed herein and are covered in the protection scope of the present invention.

Those skilled in the art understand that all or part of the steps in the method provided by the foregoing embodiments of the present invention can be implemented by hardware under the instruction of a program. The program can be stored in a computer readable storage medium, such as a Read Only Memory (ROM), a Random Access Memory (RAM), a magnetic disk, or a Compact Disk-Read Only Memory (CD-ROM).

Although the present invention has been described in detail through some specific embodiments, the invention is not limited to such embodiments. It is apparent that those skilled in the art can make various modifications and variations to the invention within the technology scope disclosed by the present invention, which should fall into the protection scope of the present invention. Therefore, the protection scope of the present invention is subjected to the protection scope of the claims.

## Claims

1. A method for performing device management through a gateway device, comprising:
receiving a register message which carries a terminal ID and a gateway device address;
associating storing the terminal ID and the gateway device address;
obtaining the gateway device address according to the association; and
sending a Device Management (DM) notification message to the gateway device according to the gateway device address so that the gateway device performs corresponding processing according to the DM Notification message.

2. The method of claim 1, wherein the step of associating storing the terminal ID and the gateway device address further comprises:
if an association record of the terminal ID is stored, when the gateway device address in the association record is the same as the gateway device address in the Register message, not associating storing the terminal ID and the gateway device address in the register message; and when the gateway device address in the association record is different from the gateway device address in the register message, replacing the gateway device address in the association record with the gateway device address in the Register message.

3. The method of claim 1, after the step of sending the DM notification message to the gateway device, further comprising:
receiving, by the gateway device, the DM notification message which carries an ID of a managed terminal; and
forwarding, by the gateway device, the DM notification message to the managed terminal according to the ID of the managed terminal so that the managed terminal sets up a session with a Device Management Server (DMS) according to the DM Notification message and accept device management of the DMS.

4. The method of claim 1, after the step of sending the DM notification message to the gateway device, further comprising:
receiving, by the gateway device, the DM notification message;
setting up, by the gateway device, a session with a Device Management Server (DMS) according to the DM notification message to receive an operation command of the DMS on a terminal Management Object (MO) mapped into the gateway device; and
performing, by the gateway device, corresponding processing on a terminal corresponding to the terminal MO according to the operation command.

5. The method of claim 1, wherein the step of receiving the register message comprises:
receiving the register message sent by the gateway device or terminal.

6. A method for performing device management through a gateway device, comprising:
sending a register message to a Device Management Server (DMS), where the register message carries a gateway device address and a terminal ID, so that the DMS associates and stores the gateway device address and the terminal ID, and sends a DM notification message to the gateway device according to the stored gateway device address when the DMS sends the DM notification message, so that the gateway device performs corresponding processing according to the DM Notification message.

7. A Device Management Server (DMS), comprising:
a first receiving module, configured to receive a register message which carries a terminal ID and a gateway device address;
an associating module, configured to associate and store the terminal ID and the gateway device address;
an obtaining module, configured to obtain the gateway device address according to the association; and
a first sending module, configured to send a Device Management (DM) notification message to a gateway device according to the gateway device address so that the gateway device performs corresponding processing according to the DM notification message.

8. An apparatus for performing device management through a gateway device, comprising:
a second sending module, configured to send a register message to a Device Management Server (DMS), where the register message carries a gateway device address and a terminal ID, so that the DMS associates and stores the gateway device address and the terminal ID, and sends a DM notification message to the gateway device according to the stored gateway device address when the DMS sends the DM notification message, so that the gateway device performs corresponding processing according to the DM notification message.

9. The apparatus of claim 8, further comprising:
a second receiving module, configured to receive the DM notification message which is sent by the DMS and carries the ID of a managed terminal; and
a forwarding module, configured to send the DM notification message to the managed terminal according to the ID of the managed terminal so that the managed terminal sets up a session with the DMS according to the DM Notification message and accepts device management of the DMS.

10. The apparatus of claim 8, further comprising:
a third receiving module, configured to receive the DM Notification message sent by the DMS;
a session setup module, configured to set up a session with the DMS according to the DM Notification message to receive an operation command of the DMS on a terminal Management Object (MO) mapped into the gateway device; and
a management operation module, configured to perform a corresponding operation for the terminal related to the terminal MO according to the operation command.

11. The apparatus of any one of claims 8-10, wherein the apparatus for managing devices through a gateway device is a gateway device.

12. The apparatus of claim 8, further comprising:
a fourth receiving module, configured to receive the DM notification message sent by the DMS; and
a session setup module, configured to set up a session with the DMS according to the DM Notification message and accept a management operation of the DMS.

13. The apparatus of claim 8 or 12, wherein the apparatus for performing device management through a gateway device is a terminal.
